# EUROPEAN PATENT SPECIFICATION

(11) **EP 3 158 433 B1**
(45) Date of publication and mention of the grant of the patent: **19.10.2022**
(21) Application number: 15732149.8
(22) Date of filing: 16.06.2015
(51) Int. Cl.: G06F 8/60

(54) **SYSTEM AND METHOD FOR INTEGRATING WEB AND NATIVE APPLICATIONS FROM WEB-BASED CONTEXTS**
SYSTEM UND VERFAHREN ZUR INTEGRATION VON WEB-BASIERTEN UND NATIVEN ANWENDUNGEN AUS WEB-BASIERTEN KONTEXTEN
SYSTÈME ET PROCÉDÉ D'INTÉGRATION D'APPLICATIONS WEB ET NATIVES À PARTIR DE CONTEXTES BASÉS SUR LE WEB

(30) Priority: 17.06.2014 US 201414306527
(43) Date of publication of application: 26.04.2017
(73) Proprietor: Google LLC, Mountain View, CA 94043 (US)
(72) Inventor: PROCOPIO, Michael Jeffrey, Mountain View, CA 94043 (US); LIEBRAND, Jelte, Mountain View, CA 94043 (US)
(74) Representative: Betten & Resch
(86) International application number: PCT/US2015/036073
(87) International publication number: WO 2015/195694

(56) References cited:
- US-A1- 2010 281 102
- US-A1- 2010 299 187
- US-B1- 6 523 166
- Anonymous: "Active Directory - Wikipedia", , 7 June 2014 (2014-06-07), XP055454084, Retrieved from the Internet: URL:https://en.wikipedia.org/w/index.php?t itle=Active_Directory&oldid=611991903 [retrieved on 2018-02-26]
- Anonymous: "Challenge-response authentication - Wikipedia, the free encyclopedia", , 14 June 2014 (2014-06-14), pages 1-4, XP055263020, Retrieved from the Internet: URL:https://en.wikipedia.org/w/index.php?t itle=Challenge%E2%80%93response_authentica tion&oldid=612907158 [retrieved on 2016-04-05]

## Description

### Cross Reference to Related Applications

This application claims priority to U.S. Application Serial No. 14/306,527, filed June 17, 2014.

### Background

Personal computers traditionally use only directly accessible resources to execute programs and store files. But as network access has become more widespread, it has become feasible to execute programs and store files using remote resources. The use of remote resources, commonly referred to as cloud computing, can allow a user to access a file or an application using any device that can access a network. Cloud computing can thereby reduce the user's need for local computer resources and assure the user that, regardless of which device is available, the user will be able to access an up-to-date version of a desired file or application. Cloud computing systems generally allow users to access files using a web- based application executed by the cloud computing system, but such web-based applications may not be optimized for the user's device.

US 6 523 166 B1 (MISHA DEBI P [US] et al) 18 February 2003, teaches a method and system for installing software implementations such as applications and COM classes as they are needed from an external source, such as a centralized network store. The system and method first look to the local system (e.g. registry) for that software implementation, and if found, returns the information such as a local path needed to use the software implementation. If the implementation is not found locally, the system and method dynamically look to a centralized class store of a network, to locate the needed implementation. When located, the implementation is downloaded and locally installed in a manner that is essentially transparent to the user.

### Summary

Objects of the present application are achieved by subject matters of the independent claims. Dependent claims define some exemplary embodiments.

Thus there exists a need in the art to identify applications that a user of a client computing device may use to access a service provided by a cloud computing system. The systems and methods described herein allow the client computing device to identify applications, whether online web-based applications or local applications installed on the client computing device, that are available to the user and with which the user may access the cloud computing service.

In certain aspects, the systems and methods described herein relate to identifying applications that are available to a user of a cloud computing service. A client computing device may be configured to access the cloud computing service, and may include a communication processor in communication with an identification database and an application database. The identification database may store information regarding at least one characteristic of the client computing device, and the application database may store information regarding applications installed on the client computing device. The communication processor may request access to a cloud computing server providing the cloud computing service, and transmit information verifying that the client computing device is authorized to access information associated with a user account. The communication processor may receive an account list of applications associated with the user account, and may identify at least one of a characteristic of the client computing device and a local list of applications installed on the client computing device. The characteristic of the client computing device may be retrieved from the identification database, and may include an operating system of the client computing device, an Internet browser installed on the client computing device, or other suitable information. The local list may be retrieved or derived from the application database, and may include a browser extension installed on the client computing device. A browser extension may be a plug-in to an Internet browser providing a user interface for interacting with the cloud computing server via the client computing device. The communication processor may generate an availability list of applications that can be executed by the client computing device based on the account list and the at least one of the characteristic of the client computing device and the local list of applications.

In some implementations, the communication processor receives information identifying a file type available to the user account from the cloud computing server, such as by receiving a list of files associated with the user account. In such implementations, the communication processor determines whether any applications on the availability list of applications are capable of accessing the file type, and, if so, provides the user with a list of such applications. The file type may be identified by a file extension, a Multipurpose Internet Mail Extension (MIME) type, or some other suitable means. The communication processor may receive a user selection of an application on the availability list of applications, and, in response to the receiving the user selection, access a file of the file type with the user-selected application, in some implementations by generating the file. In some implementations, if the availability list of applications does not include an application capable of accessing the file type, the communication processor generates and provides the user with a filtered account list of applications, the filtered account list including applications that are on the account list of applications and associated with the characteristic of the device but that are not included in the local list of applications.

In some implementations, the communication processor may receive a user selection of an application on the availability list of applications, and, in response to receiving the user selection, execute the user-selected application.

In some implementations, the communication processor may transmit the availability list to the cloud computing server.

### Brief Description of the Drawings

The systems and methods described herein are set forth in the appended claims. However, for the purpose of explanation, several embodiments are set forth in the following drawings.
FIG. 1 is a block diagram of a cloud computing system, according to an illustrative imp lementation;
FIG. 2 is a block diagram of a cloud computing engine, according to an illustrative implementation;
Fig. 3 is a block diagram of a client computing device, according to an illustrative imp lementation;
FIG. 4 depicts an exemplary screenshot of a user interface for presenting a user with a list of applications available to a personal computer to access a file on the cloud computing system of FIG. 1, according to an illustrative implementation;
FIG. 5 depicts an exemplary screenshot of a user interface for presenting a user with a list of applications available to a mobile computing device to generate a file on the cloud computing system of FIG. 1, according to an illustrative implementation;
FIG. 6 is a flow chart of a process for verifying the identity of a user of the cloud computing system, according to an illustrative implementation;
FIG. 7 is a flow chart of a process for identifying applications available to a user of the cloud computing system, according to an illustrative implementation; and
FIG. 8 is a block diagram of a computing device for performing any of the processes described herein, according to an illustrative implementation.

### Detailed Description

In the following description, numerous details are set forth for the purpose of explanation. However, one of ordinary skill in the art will realize that the implementations described herein may be practiced without the use of these specific details and that the implementations described herein may be modified, supplemented, or otherwise altered without departing from the scope of the systems and methods described herein.

The systems and methods described herein relate to identifying applications that a user may use to access a service provided by the cloud computing system. Such applications may include online web-based applications provided by the cloud computing system, online web-based applications provided by a third party and configured to interact with cloud computing system, and local applications installed on a client computing device with which the user is accessing the cloud computing service. Applications not provided by the cloud computing system may interact with the cloud computing system through an Application Programming Interface (API) or other suitable means. Local applications may include stand-alone applications, such as word processors, or plug-ins, such as browser extensions, that add functionality to a stand-alone application installed on a user device. Whether a local application is or is not a stand-alone application, it may be configured to interact with the cloud computing system itself, or may interact with the cloud computing system through an intermediary application. As an illustrative example of the latter, a cloud computing system may indirectly interact with a browser extension through its associated Internet browser. In such an example, the cloud computing system may transmit the output of a cloud computing service to the Internet browser as HyperText Markup Language (HTML), which the Internet browser may then provide to the browser extension.

A user may therefore access a cloud computing service using online web-based applications that are compatible with both the cloud computing service and a client computing device with which the user is accessing the cloud computing service. The user may also or alternatively access the cloud computing service using local applications installed on the client computing device if such local applications are capable, directly or indirectly, of accessing the cloud computing service. To identify available applications, a client computing device authorized to access a user account on a cloud computing server may receive an account list of applications associated with the user account. The client computing device may identify at least one of a characteristic of the client computing device and a local list of applications installed on the client computing device, and may filter the account list of applications based on the identification. Filtering the account list of applications may generate an availability list of applications that can be executed by the client computing device.

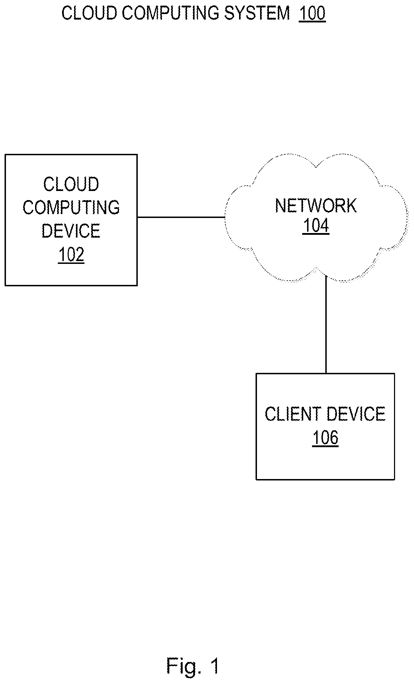

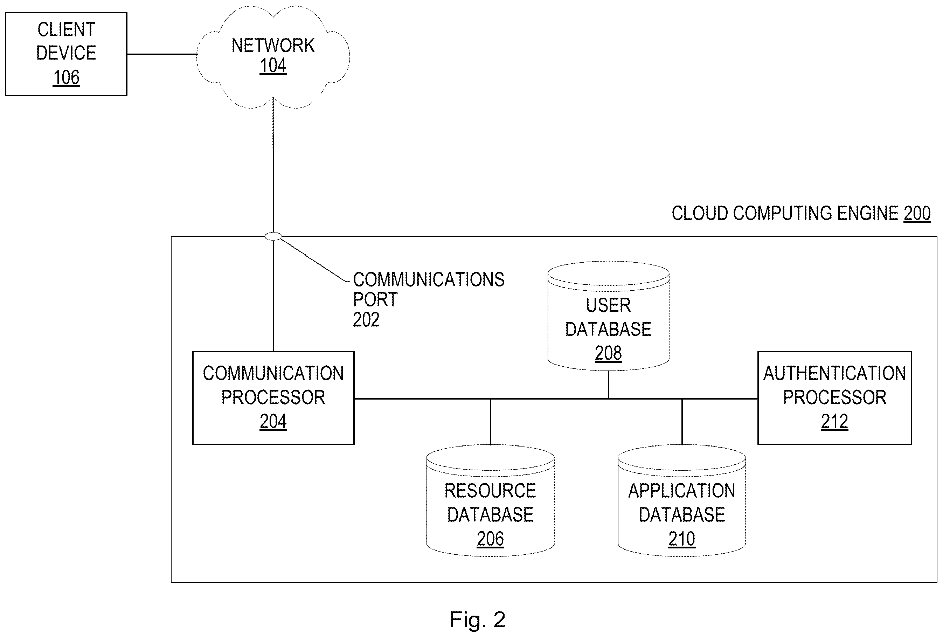

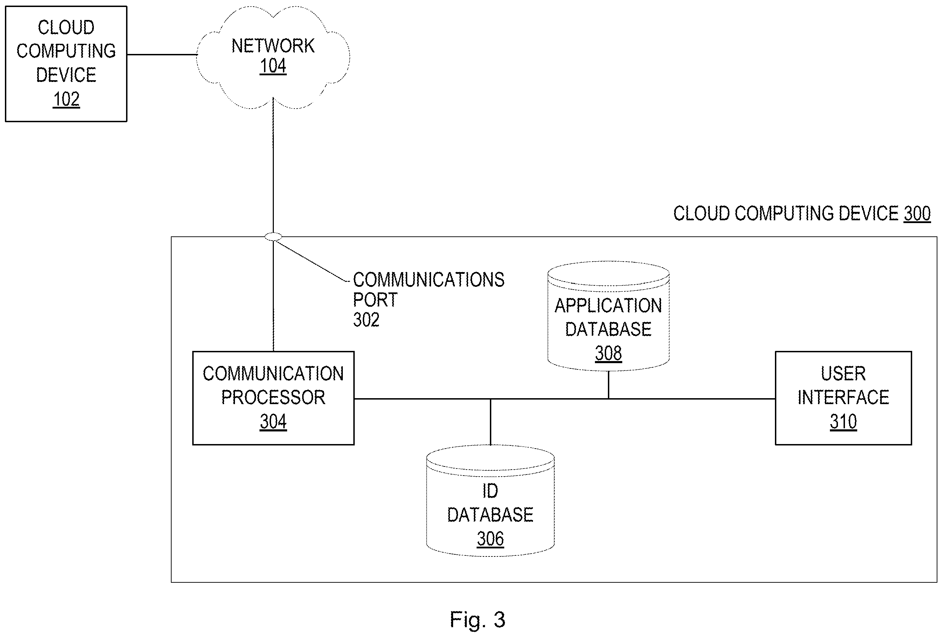

Figure 1 is an illustrative block diagram of a cloud computing system 100, which may provide cloud computing services such as remote storage of and access to computer files. Computer files may include text, pictures, audio files, video files, presentation files, spreadsheets, binary data files, computer instructions, HTML files, or other suitable files. Files are stored on cloud computing device 102, which may include a server, a personal computer, a mainframe, a cluster of computing devices, or some other suitable computing device, and is described in more detail in relation to FIG. 2. Files may be uploaded to or accessed from cloud computing device 102 via network 104. Network 104 is a computer network, and in certain implementations may be the Internet. A user accesses files on cloud computing device 102 through client device 106. Client device 106 may be a personal laptop computer, a personal desktop computer, a tablet computer, a smartphone, or some other suitable computing device, and is described in more detail in relation to FIG. 3. The user may interact with cloud computing device 102 through user interface (UI) 108, which may be generated by client device 106 based in whole or in part on instructions sent by cloud computing device 102.

UI 108 is an interface through which a user may access files and applications associated with cloud computing device 102. UI 108 may include an application, such as a web browser or other suitable application, which is executed by client device 106 and which displays information received from cloud computing device 102. UI 108 may generate and send commands to cloud computing device 102 in response to a predetermined action by a user, which may include selecting an icon with a cursor or on a touchscreen, selecting a menu option with a cursor or on a touchscreen, writing a text command, or other suitable action. Commands may include requests to access a file with a default application, requests to retrieve a list of applications capable of accessing a file and available to the user, requests to access a file with a selected application, and other suitable commands. In certain implementations, different user interactions with UI 108 may generate different commands.

As an illustrative example of such an implementation on a client device 106 with a touchscreen, UI 108 may detect a user tapping an area of the touchscreen associated with a file. If the user stops pressing the area within a predetermined amount of time, UI 108 may generate a request to access the file using a predetermined default application. If the user presses the area for a period lasting longer than the predetermined amount of time, UI 108 may request a list of available applications capable of opening the file from cloud computing device 102 and provide the list to the user. In response to the user selecting an application from the list, UI 108 may request cloud computing device 102 provide file access to the user-selected application.

Cloud computing system 100 allows a user to access services using client device 106. Services may include generating, accessing, or editing files, executing a web-based application, or other suitable services. Client device 106 connects to cloud computing device 102 through network 104. UI 108 displays information provided by cloud computing device 102, such as a list of files associated with the user. A user may interact with UI 108 to request access to a file or an application, such as by selecting icons with a cursor. Cloud computing device 102 may provide a list of applications available to a user to client device 106, which may filter the list to generate a list of applications immediately available to the user. Client device 106 may provide the list of available applications to the user, and execute an application that the user selects from such a list.

Figure 2 is an illustrative block diagram of a cloud computing engine 200, which may act as the cloud computing device 102 of FIG. 1. Cloud computing engine 200 allows client device 106 to access services over network 104. Cloud computing engine 200 transmits and receives data through communications port 202. Communication processor 204 identifies user instructions received through communications port 202 and transmits information to the client device 106 based on the received instructions. Files are stored in resource database 206, user information is stored in user database 208, and information regarding applications may be stored in application database 210. In certain implementations, application database 210 may also store applications. Authentication processor 212 may verify the identity of a user, whether client device 106 is authorized to access a service provided by cloud computing engine 200, whether a user-selected application is authorized to access a file associated with cloud computing engine 200, or other suitable information.

The depicted communications port 202 is a network port which receives user commands via network 104 and transmits information and file contents sent by cloud computing engine 200. Communications port 202 may include a 100BASE-TX port, a 1000BASE-T port, a 10GBASE-T port, a Wi-Fi antenna, a cellular antenna, or other suitable network ports. In certain implementations, there may be a different number of ports than are depicted. In certain implementations, communications port 202 may provide secure communications, such as by using the Secure Sockets Layer (SSL) protocol, the Transport Layer Security (TLS) protocol, or other suitable protocol.

Communication processor 204 may be a computer processor which identifies instructions received through communications port 202 and transmits information to a client device 106 in response. Upon a client device 106 connecting to cloud computing engine 200, communication processor 204 may identify a user account that the user device is attempting to access, in certain implementations by comparing login information provided by the user to information stored in user database 208. Communication processor 204 may further identify the client device 106 from packet headers identifying the source of data received from the user, by querying the client device 106, from information provided by the client device 106 at login, or through some other suitable method of identifying the user device.

Communication processor 204 may identify an account list of applications associated with the user account based on information stored in application database 210. Communication processor 204 may transmit the account list to the client device 106 based on one or more criteria, which may include whether authentication processor 212 has verified that the client device 106 is authorized to access information associated with the user account, receipt of a request to access a list of applications associated with the user account, receipt of a request to access or generate a file, or some other suitable criterion. In implementations in which communication processor 204 transmits an account list in response to a request associated with a file type, communication processor 204 may identify the file type associated with the request based on a file extension, a Multipurpose Internet Mail Extension (MIME) type, file metadata, or based on some other suitable identifying information. In some such implementations, communication processor 204 may filter the account list to include only applications capable of interacting with the identified file type. In some implementations, if the account list does not include any applications capable of accessing the file type associated with a user request, communication processor 204 may provide a user with an option to gain access to one or more applications capable of accessing the identified file type. Such an option may be provided by instructing UI 108 to display a message with a link to gain access to an application. In some such implementations, communication processor 204 may install an application on a client device 106 in response to a user accepting an option to gain access to an application.

Communication processor 204 may also provide a cloud computing service to a user by transmitting instructions for executing a user-selected application, the output of a user-selected application, file information associated with a user account, or other suitable information.

Resource database 206 may be a computer-readable and -writable medium storing at least one file associated with a cloud computing system 100, which may include text, images, audio files, video files, spreadsheets, presentation files, HTML files, or other suitable computer files. Resource database 206 may also store metadata associated with each file, which may include a MIME type of the file. In certain implementations, file metadata may also include one or more users authorized to view or edit the file, the application used to generate the file, a default application for accessing the file, a record of when and by whom the file was previously accessed or edited, or other suitable information. In some implementations, a portion of resource database 206 may be accessed through a remote network, and may be a third-party database.

User database 208 may be a computer-readable and -writable medium storing information associated with at least one user of cloud computing engine 200. The information may include one or more of a username and password associated with a user, a list of the files associated with each user, a list of at least one client device 106 associated with the user, a list of cloud applications associated with the user, a list of applications available to a user, a list of each application the user has authorized to access each file or file type represented in the user's files, a default application the user has identified for accessing a file type, user-specified preferences, or other suitable user information.

Application database 210 may be a computer-readable and -writable medium storing information regarding applications associated with cloud computing engine 200. Application database 210 may include compiled or uncompiled computer instructions comprising an application, a link to access a cloud application, a link to download a native application, an icon associated with an application, a description of an application, or other suitable information regarding an application. Computer instructions comprising an application may be performed by cloud computing engine 200 and the output transmitted to a client device 106, or may be transmitted to a client device 106 for execution, in some implementations by a web browser. Such computer instructions may be written in HTML, JavaScript, Asynchronous JavaScript and XML (Ajax), or another suitable computer language. Application database 210 may store metadata associated with an application, which may include file types the application is capable of opening, characteristics of those client devices 106 which may execute the application, Internet browsers with which the application is compatible, users authorized to use the application, whether the application is capable of interfacing with cloud computing engine 200 to access cloud computing resources, alternate versions of the application, or other suitable information. In certain implementations, application database 210 may include metadata for an application not stored in application database 210.

In some implementations, two or more of resource database 206, user database 208, and application database 210 may be combined into a single database. As an illustrative example of such an implementation, a single database may store information identifying user accounts as well as files associated with the user accounts.

Authentication processor 212 may be a computer processor which blocks unauthorized access of information associated with cloud computing engine 200. Unauthorized access may be detected by comparing one or more of a username and password combination, information identifying a client device 106, geographic information associated with the client device 106, or other suitable information received from a client device 106 with information stored in user database 208. If a request generator is not successfully verified, authentication processor 212 may transmit a message to the user or a system administrator, block client device 106, temporarily lock the user account, or take some other predetermined action. In certain implementations, if a client device 106 has not previously been connected to cloud computing engine 200, authentication processor 212 may require the user to provide identification information, which may include a username and password combination, an identification number provided to the user by a voice or text message sent to a telephone number previously provided by the user, or other predetermined identification information. In certain implementations, authentication processor 212 may verify that an application may be allowed to access a file by searching resource database 206, user database 208, and application database 210 to determine whether the application is associated with the user, whether the application is associated with the file type of the file, whether the user has authorized the application to access the file or the file type, or other suitable verification information. In some such implementations, authentication processor 212 may verify a security token provided by the application against information stored in one or more of resource database 206, user database 208, or application database 210. If an application is not authorized to access a file, authentication processor 212 may prevent the application from accessing the file, transmit a message to the user or a system administrator, or take some other suitable action. In certain implementations, such a message to the user may ask if the user wishes to authorize the application to access the file. In certain implementations, authentication processor 212 may establish a secure connection with client device 106 using a protocol such as the SSL or TLS protocols.

Cloud computing engine 200 receives transmissions from client device 106 at communications port 202 via network 104. Authentication processor 212 may compare information provided by a client device 106 with information stored in user database 208 to verify that a user is authorized to access a cloud computing account. Communication processor 204 may identify the cloud computing account upon receiving a connection request from a client device 106. Communication processor 204 may transmit an account list of applications associated with the user account to client device 106, and may receive an availability list of applications that may be executed by the client device 106. Communication processor 204 may provide the user with an indication of which applications on the availability list are capable of accessing a file associated with the user account, and may execute or instruct client device 106 to execute an application from the list in response to a user command. Communication processor 204 may generate, alter, or delete a file or metadata associated with a file in resource database 206 based on user commands or on the output of applications associated with a user account.

Figure 3 is an illustrative block diagram of a client computing device 300, which may act as the client device 106 of FIG. 1. Client computing device 300 allows a user to access cloud computing services provided by cloud computing device 102. Client computing device 300 transmits and receives data through communications port 302. Communication processor 304 transmits user instructions through communications port 302 and receives information from cloud computing device 102. Information regarding client computing device 300 and any users associated with client computing device 300 are stored in identification (ID) database 306, and applications and information regarding applications installed on or associated with client computing device 300 are stored in application database 308. In certain implementations, ID database 306 and application database 308 may be combined in a single database. User interface (UI) 310 is an interface that may allow a user to provide instructions to an application or to cloud computing device 102, and may display the output of an application, information generated by cloud computing device 102, or other suitable information to a user.

The depicted communications port 302 is a network port which transmits user commands through network 104 and receives information and file contents sent by cloud computing device 102. Communications port 302 may include a 100BASE-TX port, a 1000BASE-T port, a 10GBASE-T port, a Wi-Fi antenna, a cellular antenna, or other suitable network ports. In certain implementations, there may be a different number of ports than are depicted. In certain implementations, communications port 302 may provide secure communications, such as by using the Secure Sockets Layer (SSL) protocol, the Transport Layer Security (TLS) protocol, or other suitable protocol.

Communication processor 304 may be a computer processor which acts on user instructions received through UI 310 and information received through communications port 302, which may include transmitting instructions and information to cloud computing device 102. Communication processor 304 may request access to a user account associated with cloud computing device 102. Communication processor 304 may also transmit information verifying that the client computing device 300 is authorized to access information associated with the user account. Such authorization information may be transmitted with the initial access request or may be transmitted in response to a query by the cloud computing device 102, and may include information stored in ID database 306, information provided by the user through UI 310, or both.

Communication processor 304 may receive an account list of applications associated with the user account from cloud computing device 102. Communication processor 204 may identify one or more characteristics of client computing device 300 and a local list of applications installed on the client computing device. Characteristics of client computing device 300 may include a make and model of the device, an operating system of the device, an Internet browser providing a UI used to access a service of cloud computing device 102, or other suitable information. A local list of applications may include applications being executed by client computing device 300, applications installed on client computing device 300, browser extensions that are being executed by an Internet browser being used to access cloud computing device 102, or other suitable applications. Communication processor 304 may generate an availability list of applications that can be executed by the client computing device 300 by filtering the received account list based on any identified characteristics of client computing device 300 and on the local list of applications. In some implementations, communication processor 304 may also or alternatively add applications from the local list of applications to the received account list to generate the availability list of applications. Communication processor 304 may transmit the availability list of applications to the cloud computing device 102 in whole or in part. In some implementations, communication processor 304 may further filter the account list based on types of files accessible to applications on the account list. As an illustrative example, if a user has indicated that they wish to choose an application to generate or access a spreadsheet, communication processor 304 may generate an availability list of applications based not only on which applications are associated with the user account and compatible with the client computing device 300, but which applications are capable of accessing spreadsheet files.

ID database 306 may be a computer-readable and -writable medium storing information regarding client computing device 300 or a user of client computing device 300. Such information may include a manufacturer of the device, a model of the device, a Media Access Control (MAC) address of the device, an operating system of the device, a part or the whole of cloud computing account login information for a user associated with the device, an Internet browser associated with the device, or other suitable information. Information stored in ID database 306 may be used to verify that client computing device 300 is authorized to access information associated with a cloud computing account, such as information that identifies the device as having previously been authorized to access the account. Information stored in ID database 306 may also or alternatively be used to filter lists of applications to exclude applications incompatible with client computing device 300. As an illustrative example, if a cloud computing account is associated with applications that are only compatible with one operating system, those applications are not available to a user accessing the account using a client computing device 300 running a different operating system.

Application database 308 may be a computer-readable and -writable medium storing information regarding applications associated with client computing device 300. Application database 308 may include compiled or uncompiled computer instructions comprising an application, a link to access a cloud application, a link to download a native application, an icon associated with an application, a description of an application, a browser extension adding functionality to an Internet browser executed by client computing device 300, or other suitable information relating to an application. Computer instructions may be written in C++, HTML, JavaScript, Asynchronous JavaScript and XML (Ajax), or another suitable computer language. Application database 308 may store metadata associated with an application, which may include file types the application is capable of opening, Internet browsers with which the application is compatible, users authorized to use the application, whether the application is capable of interfacing with cloud computing device 102 to access cloud computing resources, alternate versions of the application, or other suitable information. In some implementations, ID database 306 and application database 308 may be implemented in a single database. As an illustrative example of such an implementation, an Internet browser used to access information associated with a cloud computing service may be stored in an application database, and the identity of the Internet browser may comprise a characteristic of client computing device 300.

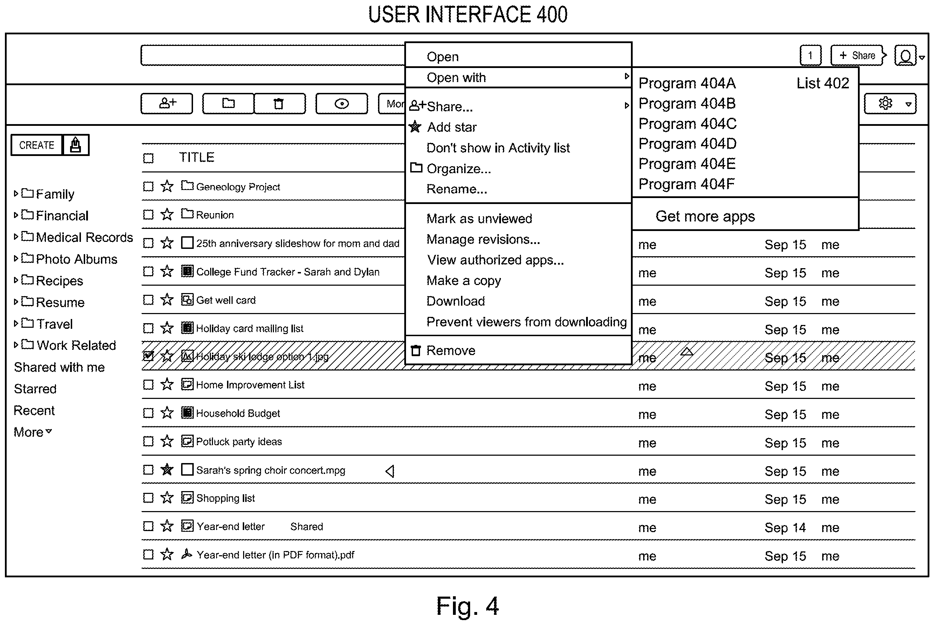

UI 310 may be an interface allowing a user to interact with applications executed by client computing device 300 and services provided by cloud computing device 102, and may include UI 108 of FIG. 1. UI 310 may include a keyboard, a mouse, a touchscreen, or other suitable input devices. UI 310 may include a display, an audio output, or other suitable output devices, and provide the user with a representation of information received from cloud computing device 102 or generated by an application, such as is depicted in FIG. 4.

Client computing device 300 communicates with cloud computing device 102 over network 104 to access cloud computing services. Transmissions are sent and received by communications port 302, and generated and acted upon by communication processor 304. Communication processor 304 may transmit information verifying that client computing device 300 is authorized to access a cloud computing account to cloud computing device 102. Communication processor 304 may receive an account list of applications associated with the cloud computing account from cloud computing device 102, and, based on the list and on information stored in ID database 306 and application database 308, may generate an availability list of applications that are available to the user accessing the cloud computing account with client computing device 300. The availability list and other information associated with the cloud computing account may be presented to the user through UI 310. UI 310 may further allow the user to select an application from the availability list to execute. As an illustrative example, a user may interact with UI 310 to request access to a resource stored on cloud computing device 102, see a list of applications available to the user and capable of accessing the resource, select an application from the list, and access the resource using the selected application.

Figure 4 depicts an exemplary screenshot of a UI 400 that may be UI 310 of FIG. 3. UI 400 is displayed on a desktop or laptop personal computer, and in some implementations may be generated by an Internet browser based on information received from cloud computing device 102. As depicted, UI 400 presents a user with a list 402 of programs 404A-F (collectively, programs 404) that are both capable of accessing a file and available to the user. List 402 may be generated by a communication processor 304, and programs 404 may include online web applications provided by a cloud computing service, stand-alone local applications stored on and executed by a computing device generating UI 400, and browser extensions that the user has added to an Internet browser associated with UI 400. The user may select one of the programs 404 to access the file. In certain implementations, the user may further indicate a default application with which to open the file or file type in the future.

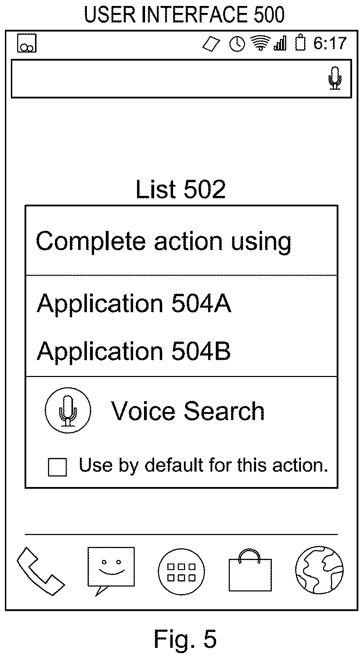

Figure 5 depicts an exemplary screenshot of a UI 500 that may be UI 310 of FIG. 3. UI 500 is displayed on a mobile computing device, which may include a smartphone or a tablet computer, and presents a user with a list of applications capable of generating a file of a particular file type. As depicted, the user has not requested to generate the file using a default application, and is therefore presented with a list 502 of available applications. List 502 may be generated by a communication processor 304 based on an account list of applications received from a cloud computing device 102, applications (including browser extensions) installed on the device generating UI 500, the file type of the file to be generated, or other suitable information. The user may select one of the programs 504A-B to generate the file. In the depicted implementation, the user may further indicate a new default application with which to generate a file of the file type in the future. In some such implementations, communication processor 304 may transmit the default application selection to cloud computing device 102, allowing the user's preferences to be applied to other devices-in some implementations depending on device characteristics-with which the user accesses the same cloud computing account information in the future.

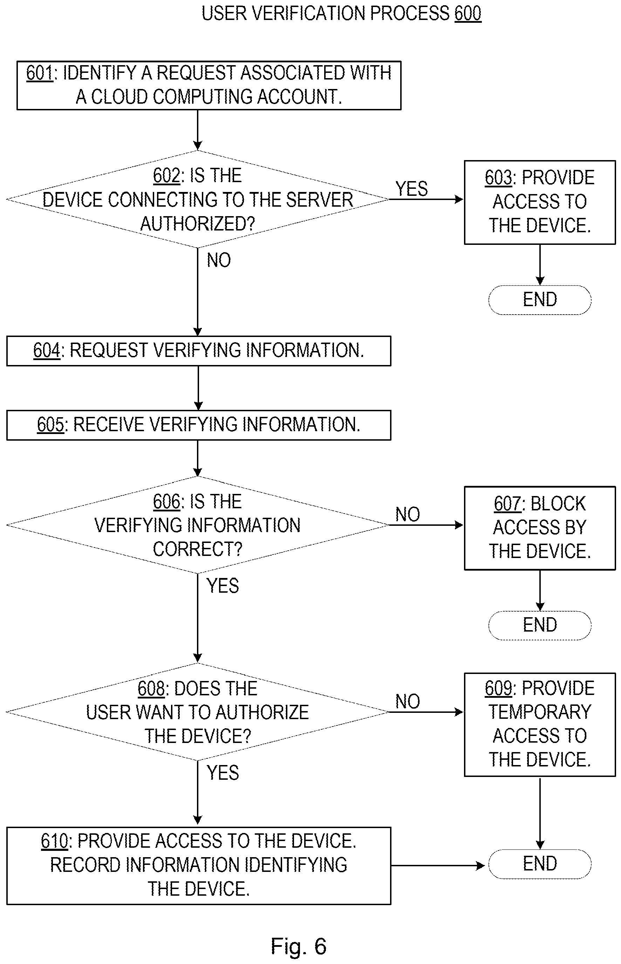

Figure 6 is an illustrative flow chart of a user verification process 600. Referring to FIG. 2, user verification process 600 verifies that a request generator is authorized to access information associated with cloud computing engine 200. User verification process 600 begins with step 601, in which communication processor 204 identifies a request from a client device 106 associated with a cloud computing account, such as a login request or a request for information associated with the account. In step 602, authentication processor 212 determines whether the client device 106 has been authorized to access information associated with the cloud computing account based on information regarding the request. Information regarding the request may include information regarding the source of the request, such as an Internet Protocol (IP) address from which the request was received, and information included within the request, such as user login information. Referring to FIG. 3, such information includes one or more of information retrieved from ID database 306 and information provided by the user through UI 310 in generating the request. Authentication processor 212 determines whether such information matches information stored in user database 208 to determine whether client device 106 has been authorized to access the requested cloud computing account. Authentication processor 212 examines other data before allowing the client device 106 to access the authorizing user's data. In such implementations, authentication processor 212 compares information stored in user database 208 with Global Positioning System (GPS) data from the client device 106, IP routing data, or other data associated with the client device 106, and proceeds to step 607 in the case of a mismatch. As an illustrative example of such implementations, if a first client device 106 is accessing data associated with a user account, and a second client device 106 in a different geographic location attempts to access data associated with the same user account, authentication processor 212 blocks the second client device 106 from accessing the cloud computing engine 200. In certain implementations, a first client device 106 may be authorized to access a different set of the same user's files as a second client device 106. As an illustrative example of such an implementation, a user may authorize a mobile computing device to access files associated with the user but not sensitive financial files associated with the user's account.

If step 602 confirms that the client device 106 is authorized, authentication processor 212 allows the client device 106 to access the authorizing user's data in step 603. If the client device 106 is not authorized, user verification process 600 proceeds to step 604. In step 604, authentication processor 212, via communication processor 204, requests that client device 106 provide information verifying that it is authorized to access the user account. Such information includes a user ID and password combination, a personal identification number (PIN), an automatically generated identification number transmitted to a phone number provided by the user, or other suitable identifying information. Communication processor 204, upon receiving the verifying information in step 605, passes the information to authentication processor 212. In step 606, authentication processor 212 compares the verifying information to information stored in user database 208 to determine whether the verifying information is correct. If the verifying information is incorrect, authentication processor 212 instructs communication processor 204 to block access by the device in step 607, and may temporarily block access to the account, alert the user or a systems administrator, or take other suitable action.

If the user identification is correct, step 608 determines whether the user wants to authorize the client device 106, which may be determined by identifying whether the user selected a "Remember this device" option in providing identification information, by transmitting a prompt to the user to select whether to permanently authorize the client device 106, or by some other suitable method. If not, the authentication processor 212 provides the client device 106 with temporary access in step 609. Otherwise, in step 610 the authentication processor 212 provides the client device 106 with access to cloud computing engine 200 and records information identifying the device in user database 208.

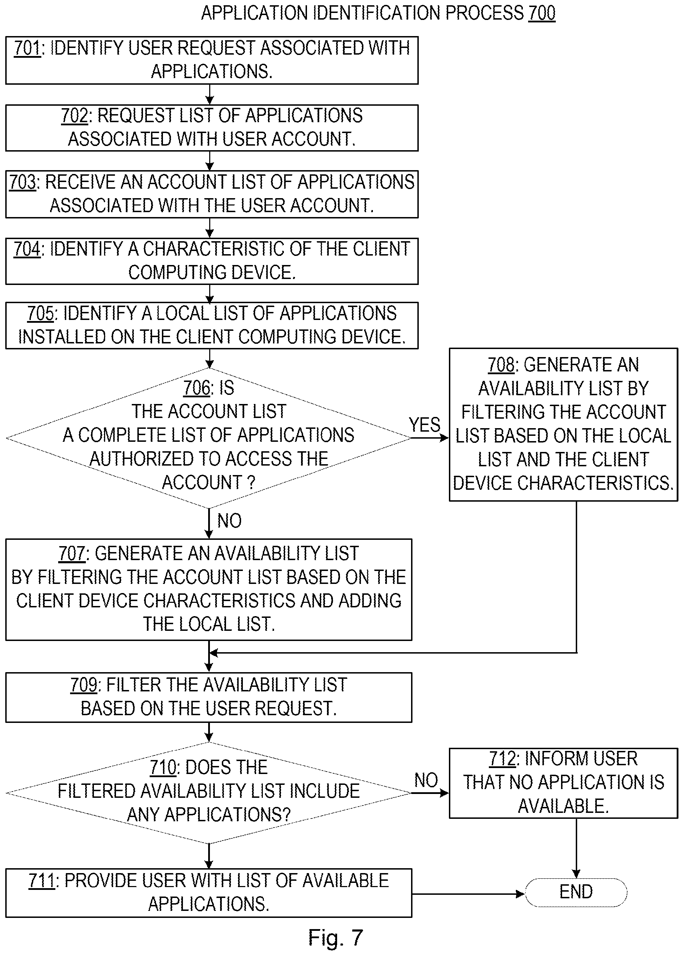

Figure 7 is an illustrative flow chart of an application identification process 700. Application identification process 700 provides a user of a cloud computing service with a list of applications available to the user. Process 700 occurs after user verification process 600 has taken place, or, in some implementations, includes user verification process 600 in one or more steps of process 700.

Referring to FIG. 3, application identification process 700 begins with step 701, in which the user makes a request associated with applications in UI 310. Illustrative examples of such user requests include a request to generate a file of a particular file type, a request to access a file, and a request to be provided with a list of applications associated with a cloud computing account. UI 310 forwards the request to communication processor 304 for action. Communication processor 304 responds by carrying out step 702, in which communication processor 304 requests a list of applications associated with a user account from a cloud computing device 102.

In step 703, communication processor 304 receives an account list of applications from the cloud computing device 102. The account list of applications is a list of information regarding applications associated with the user account, and is generated by cloud computing device 102 as described in relation to FIG. 2. In step 704, communication processor 304 identifies a characteristic of the client computing device 300 from ID database 306. Illustrative examples of such characteristics include the make and model of the client computing device 300, the operating system run by the client computing device 300, and the Internet browser presented in UI 310. In step 705, communication processor 304 further identifies a local list of applications installed on the client computing device from application database 308. In some implementations, two or more of steps 703-705 may be performed in a different order or at the same time as each other.

Step 706 determines whether only the applications on the account list received from the cloud computing device 102 are authorized to access information associated with the user account. Step 706 thus determines how to generate an availability list of applications that can interact with the cloud computing service and that the user may execute on client computing device 300. If the local list includes applications that can access the user account, then, in step 707, communication processor 304 generates an availability list by combining the local list of applications with the account list as filtered based on the client device characteristics. In some implementations, communication processor 304 may first filter the local list of applications based on whether such applications are capable of interacting with cloud computing device 102, whether the user has authorized the applications to access or edit files stored on the cloud computing device 102, or based on other suitable criteria. In such implementations, the information used to filter the applications on the local list may be stored in application database 308 as metadata associated with the applications.

If, instead, the account list of applications represents a complete list of applications capable of interacting with the cloud computing service and authorized to access the user account information, then process 700 may continue to step 708 after step 706. In step 708, communication processor 304 generates an availability list of applications by filtering the account list based on the local list and the client device characteristics. As an illustrative example, the account list may include three applications, one of which is incompatible with the client computing device 300, and a second of which is compatible with but is not installed on the client computing device 300. In such an example, the availability list would only include the third application.

Regardless of which of steps 707 and 708 were carried out, process 700 continues to step 709, in which communication processor 304 availability list is filtered based on the user request. If the user request was merely to be provided with a list of applications available to the user, the availability list is unchanged. If, however, the user request is associated with some identifiable class of applications, the availability request will be filtered accordingly. As an illustrative example, if the user request was to generate a spreadsheet, step 709 may filter the availability list to include only applications capable of generating spreadsheets.

In some implementations, communication processor 304 may transmit characteristics of client computing device 300, information regarding the user request, or the local list of applications to cloud computing device 102 in step 702, thereby allowing cloud computing device 102 to carry out one or more of steps 707, 708, and 709 before transmitting the account list for receipt in step 703 and allowing client computing device 300 to skip such steps.

In step 710, communication processor 304 determines whether the filtered availability list includes any applications. As an illustrative example, if a user requested a list of applications capable of opening a file that can only be accessed by an application incompatible with the client computing device 300, then there would be no applications on the filtered availability list. If the filtered availability list includes any applications, process 700 ends with communication processor 304 instructing UI 310 to display the list to the user in step 711. Otherwise, process 700 may end with step 712, in which the communication processor 304 informs the user via UI 310 that no application is available. In some implementations, step 712 may further suggest applications for the user to gain access to, such as by displaying a list of applications associated with the user account and compatible with but not installed on the client computing device 300. In some such implementations, the list may include an option for the user to install the application on the client computing device 300.

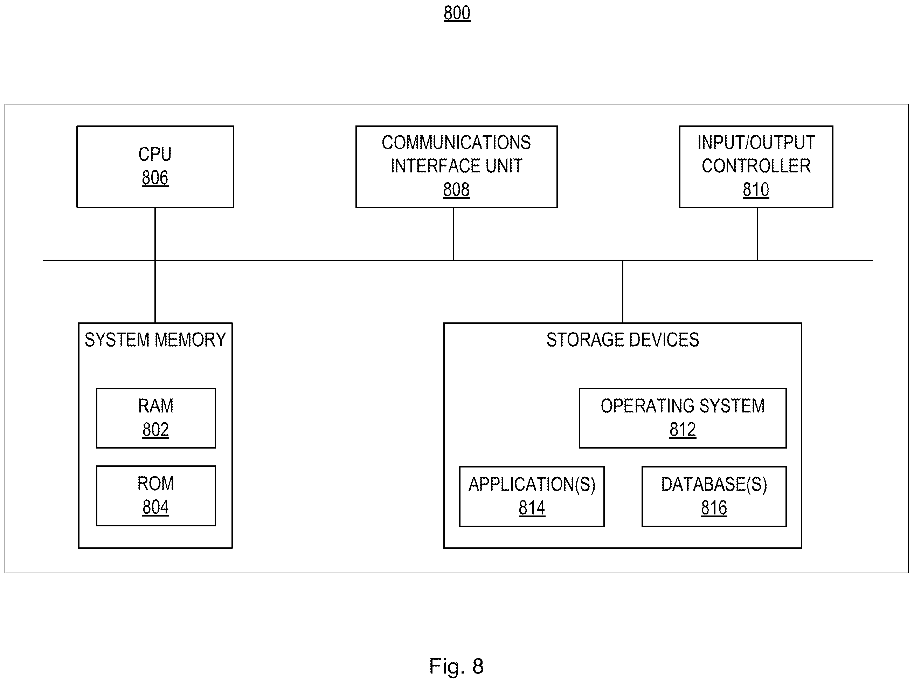

FIG. 8 is a block diagram of a computing device that can be used to implement or support any of the components of the system of FIG. 1, 2, or 3, and for performing any of the processes described herein. Cloud computing engine 200 may be implemented on one or more computing devices 800 having suitable circuitry, and client device 106 may communicate with cloud computing device 102 through one or more computing devices 800 having suitable circuitry. In certain aspects, a plurality of the components of cloud computing system 100 may be included within one computing device 800. In certain implementations, a component and a storage device may be implemented across several computing devices 800.

The computing device 800 comprises at least one communications interface unit, an input/output controller 810, system memory, and one or more data storage devices. This can support a network connection such as a connection to network 104 in FIG. 1. The system memory includes at least one random access memory (RAM 802) and at least one read-only memory (ROM 804). RAM 802 can support the resource database 206 of FIG. 2, for example. All of these elements are in communication with a central processing unit (CPU 806) to facilitate the operation of the computing device 800. The computing device 800 may be configured in many different ways. For example, the computing device 800 may be a conventional standalone computer or alternatively, the functions of computing device 800 may be distributed across multiple computer systems and architectures. In FIG. 8, the computing device 800 may be linked, via network or local network, to other servers or systems.

The computing device 800 may be configured in a distributed architecture, wherein databases and processors are housed in separate units or locations. Some units perform primary processing functions and contain, at a minimum, a general controller or a processor and a system memory. In distributed architecture implementations, each of these units may be attached via the communications interface unit 808 to a communications hub or port (not shown) that serves as a primary communication link with other servers, client or user computers, and other related devices. The communications hub or port may have minimal processing capability itself, serving primarily as a communications router. A variety of communications protocols may be part of the system, including, but not limited to: Ethernet, SAP, SAS^{™}, ATP, BLUETOOTH^{™}, GSM, and TCP/IP.

The CPU 806 comprises a processor, such as one or more conventional microprocessors and one or more supplementary co-processors such as math co-processors for offloading workload from the CPU 806. The CPU 806 is in communication with the communications interface unit 808 and the input/output controller 810, through which the CPU 806 communicates with other devices such as other servers, user terminals, or devices. The communications interface unit 808 and the input/output controller 810 may include multiple communication channels for simultaneous communication with, for example, other processors, servers, or client terminals.

The CPU 806 is also in communication with the data storage device. The data storage device may comprise an appropriate combination of magnetic, optical, or semiconductor memory, and may include, for example, RAM 802, ROM 804, flash drive, an optical disc such as a compact disc, or a hard disk or drive. The CPU 806 and the data storage device each may be, for example, located entirely within a single computer or other computing device; or connected to each other by a communication medium, such as a USB port, serial port cable, a coaxial cable, an Ethernet cable, a telephone line, a radio frequency transceiver, or other similar wireless or wired medium or combination of the foregoing. For example, the CPU 806 may be connected to the data storage device via the communications interface unit 808. The CPU 806 may be configured to perform one or more particular processing functions.

The data storage device may store, for example, (i) an operating system 812 for the computing device 800; (ii) one or more applications 814 (*e*.*g*., computer program code or a computer program product) adapted to direct the CPU 806 in accordance with the systems and methods described here, and particularly in accordance with the processes described in detail with regard to the CPU 806; or (iii) database(s) 816 adapted to store information that may be utilized to store information required by the program. The depicted database 816 can be any suitable database system, and can be a local or distributed database system.

The operating system 812 and applications 814 may be stored, for example, in a compressed, an uncompiled and an encrypted format, and may include computer program code. The instructions of the program may be read into a main memory of the processor from a computer-readable medium other than the data storage device, such as from the ROM 804 or from the RAM 802, or from a computer data signal embodied in a carrier wave, such as that found within the well-known Web pages transferred among devices connected to the Internet. While execution of sequences of instructions in the program causes the CPU 806 to perform the process steps described herein, hard-wired circuitry may be used in place of, or in combination with, software instructions for implementation of the processes of the present disclosure. Thus, the systems and methods described are not limited to any specific combination of hardware and software.

Suitable computer program code may be provided for performing one or more functions in relation to a cloud computing system as described herein. The program also may include program elements such as an operating system 812, a database management system, and "device drivers" that allow the processor to interface with computer peripheral devices (*e.g.*, a video display, a keyboard, a computer mouse, *etc.*) via the input/output controller 810.

The term "computer-readable medium" as used herein refers to any non-transitory medium that provides or participates in providing instructions to the processor of the computing device 800 (or any other processor of a device described herein) for execution. Such a medium may take many forms, including but not limited to, non-volatile media and volatile media. Non-volatile media include, for example, optical, magnetic, or opto-magnetic disks, or integrated circuit memory, such as flash memory. Volatile media include dynamic random access memory (DRAM), which typically constitutes the main memory. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM or EEPROM (electronically erasable programmable read-only memory), a FLASH-EEPROM, any other memory chip or cartridge, or any other non-transitory medium from which a computer can read.

Various forms of computer readable media may be involved in carrying one or more sequences of one or more instructions to the CPU 806 (or any other processor of a device described herein) for execution. For example, the instructions may initially be borne on a magnetic disk of a remote computer (not shown). The remote computer can load the instructions into its dynamic memory and send the instructions over an Ethernet connection, cable line, or even telephone line using a modem. A communications device local to a computing device 800 (*e.g.,* a server) can receive the data on the respective communications line and place the data on a system bus for the processor. The system bus carries the data to main memory, from which the processor retrieves and executes the instructions. The instructions received by main memory may optionally be stored in memory either before or after execution by the processor. In addition, instructions may be received via a communication port as electrical, electromagnetic, or optical signals, which are exemplary forms of wireless communications or data streams that carry various types of information.

Some implementations of the above described may be implemented by the preparation of application-specific integrated circuits or by interconnecting an appropriate network of conventional component circuits, as will be apparent to those skilled in the art. Those of skill in the art would understand that information and signals may be represented using any of a variety of different technologies and techniques. For example, data, instructions, requests, information, signals, bits, symbols, and chips that may be referenced throughout the above description may be represented by voltages, currents, electromagnetic waves, magnetic fields or particles, optical fields or particles, or any combination thereof.

While various implementations of the present disclosure have been shown and described herein, it will be obvious to those skilled in the art that such implementations are provided by way of example only. Numerous variations, changes, and substitutions will now occur to those skilled in the art without departing from the disclosure. For example, cloud computing engine 200 may add a local application to the account list if the user accesses a cloud computing service with the local application, and may suggest that the user install a local application of a user-selected application on a client device 106 if the application is not installed. Also, cloud computing engine 200 and client computing device 300 may differentiate between versions of the same program, such as by allowing one version to access information associated with a user account but not another version. Client computing device 300 may also respond to a command to execute an application by executing a native version of the application if installed, but execute the cloud version of the same application otherwise. It should be understood that various alternatives to the implementations of the disclosure described herein may be employed in practicing the disclosure. Elements of an implementation of the systems and methods described herein may be independently implemented or combined with other implementations.

## Claims

1. A computer-implemented method for identifying applications available to a user of a cloud computing service, comprising:
requesting, by a client computing device (106), access to a cloud computing server (102) providing the cloud computing service, wherein:
the client computing device (106) is authorized to access to the cloud computing server (102) if data associated with the client computing device (106), contained in the request, and including an Internet Protocol, IP, address matches information stored in a user database (208) or if data on a geographic location of the client computing device matches information stored in the user database (208);
if the client computing device (106) is authorized to access the cloud computing server (102), the client computing device (106) receives from the cloud computing server (102) a permission to access the cloud computing server (102); and
if the client computing device (106) is not authorized to access the cloud computing server (102), the following is executed:
transmitting, to the cloud computing server (102), information verifying that the client computing device (106) is authorized to access information associated with a user account, wherein the information verifying that the client computing device (106) is authorized to access information associated with a user account comprises a user ID and password combination, a personal identification number, or an automatically generated identification number transmitted to a phone number provided to the user; and
receiving, from the cloud computing server (102) the permission to access the cloud computing server (102) if the client computing device (106) is authorized to access information associated with the user account, wherein the access of the computing device to the cloud computing server (102) is blocked if the client computing device (106) is not authorized to access information
associated with a user account;
receiving, from the cloud computing server (102) in response to the requesting and in response to the reception of the permission to access the cloud computing server (102), an account list of applications associated with the user account; and
identifying at least one of a characteristic of the client computing device (106) and a local list of applications installed on the client computing device (106); and
generating an availability list (402) of applications that can be executed by the client computing device (106) based on the account list of applications and the at least one of the characteristic of the client computing device (106) and the local list of applications installed on the client computing device (106).

2. The method of claim 1, further comprising:
receiving, from the cloud computing server (102), information identifying a file type available to the user account;
determining whether at least one application on the availability list (402) of applications is capable of accessing the file type; and
in response to determining that at least one application on the availability list (402) of applications is capable of accessing the file type, providing the user with an application list of the at least one application on the availability list (402) of applications,
wherein the file type is preferably identified by a Multipurpose Internet Mail Extension, MIME, type or by a file extension associated with the file, and
wherein preferably the information identifying a file type available to the user account includes a list of at least one file associated with the user account.

3. The method of claim 2, further comprising:
in response to determining that no application on the availability list (402) of applications is capable of accessing the file type, filtering the account list of applications to generate a filtered account list of applications, wherein the filtered account list of applications includes applications that are associated with the characteristic of the device (106) but are not on the local list of applications; and
providing the filtered account list of applications to the user.

4. The method of claim 2, further comprising:
receiving a user selection of an application on the availability list (402) of applications; and in response to receiving the user selection, accessing a file of the file type with the user-selected application.

5. The method of claim 4, further comprising generating the file of the file type.

6. The method of claim 1, further comprising:
receiving a user selection of an application on the availability list (402) of applications; and in response to receiving the user selection, executing the user-selected application.

7. The method of claim 1, further comprising transmitting the availability list (402) to the cloud computing server (102).

8. The method of claim 1,
wherein the local list of applications installed on the client computing device (106) includes a browser extension, and/or
wherein the characteristic of the client computing device (106) includes an operating system of the client computing device (106), and/or
wherein the characteristic of the client computing device (106) includes an Internet browser installed on the client computing device (106).

9. A client computing device (106) configured to access a cloud computing service, comprising: a communication processor (304) in communication with:
an identification database (306) configured for storing information regarding at least one characteristic of the client computing device (106); and
an application database (308) configured for storing information regarding applications installed on the client computing device (106);
wherein the communication processor (304) is configured for:
requesting access to a cloud computing server (102) providing the cloud computing service, wherein the client computing device (106) is authorized to access to the cloud computing server (102) if data associated with the client computing device (106), contained in the request, and including an Internet Protocol, IP, address matches information stored in a user database (208) or if data on a geographic location of the client computing device matches information stored in the user database (208);
if the client computing device (106) is authorized to access the cloud computing server (102), receiving from the cloud computing server (102) a permission to access the cloud computing server (102); and
if the client computing device (106) is not authorized to access the cloud computing server (102), the communication processor (304) is configured for:
transmitting, to the cloud computing server (102), information verifying that the client computing device (106) is authorized to access information associated with a user account, wherein the information verifying that the client computing device (106) is authorized to access information associated with a user account comprises a user ID and password combination, a personal identification number, or an automatically generated identification number transmitted to a phone number provided to a user; and
receiving from the cloud computing server (102) the permission to access the cloud computing server (102) if the client computing device (106) is authorized to access information associated with the user account, wherein the access of the computing device to the cloud computing server (102) is blocked if the client computing device (106) is not authorized to access information associated with a user account;
receiving, from the cloud computing server (102) in response to the requesting and in response to the reception of the permission to access the cloud computing server (102), an account list of applications associated with the user account;
identifying at least one of a characteristic of the client computing device and a local list of applications installed on the client computing device; and
generating an availability list (402) of applications that can be executed by the client computing device (106) based on the account list of applications and the at least one of the characteristic of the client computing device (106) and the local list of applications installed on the client computing device (106).

10. The client computing device (106) of claim 9, further comprising:
a user interface (310) in communication with the communication processor (304),
wherein the user interface (310) is configured for providing information to the user;
wherein the communication processor (304) is further configured for:
receiving, from the cloud computing server (102), information identifying a file type available to the user account,
determining whether at least one application on the availability list (402) of applications is capable of accessing the file type, and
in response to determining that at least one application on the availability list (402) of applications is capable of accessing the file type, directing the user interface (310) to provide the user with an application list of the at least one application on the availability list (402) of applications,
wherein the file type is preferably identified by a Multipurpose Internet Mail Extension, MIME, type or by a file extension associated with the file, and
wherein preferably the information identifying a file type available to the user account includes a list of at least one file associated with the user account.

11. The client computing device (106) of claim 10, wherein the communication processor (304) is further configured for: filtering the account list of applications to generate a filtered account list of applications in response to determining that no application on the availability list (402) of applications is capable of accessing the file type, wherein the filtered account list of applications includes applications that are associated with the characteristic of the device (106) but are not on the local list of applications; and
directing the user interface (310) to provide the filtered account list of applications to the user.

12. The client computing device of claim 10:
wherein the user interface (310) is further configured to receive a user selection of an application on the availability list (502) of applications, and
wherein the communication processor (304) is further configured for accessing a file of the file type with the user-selected application in response to the user selection.

13. The client computing device of claim 12, wherein the communication processor (304) is further configured for generating the file of the file type.

14. The client computing device of claim 9, further comprising:
a user interface (500) configured for receiving a user selection of an application on the availability list (502) of applications,
wherein the communication processor (304) is further configured for executing the user- selected application in response to the user selection, and
wherein the communication processor (304) is preferably further configured for transmitting the availability list (502) to the cloud computing server.

15. The client computing device of claim 9,
wherein the local list of applications installed on the client computing device (106) includes a browser extension, and/or
wherein the characteristic of the client computing device (106) includes an operating system of the client computing device (106), and/or
wherein the characteristic of the client computing device (106) includes an Internet browser installed on the client computing device (106).

## Patentansprüche

1. Computerimplementiertes Verfahren zum Identifizieren von Anwendungen, die für einen Benutzer eines Cloud-Computing-Dienstes verfügbar sind, wobei das Verfahren umfasst:
Anfordern, durch eine Client-Computing-Vorrichtung (106), eines Zugriffs auf einen Cloud-Computing-Server (102), der den Cloud-Computing-Dienst bereitstellt, wobei:
die Client-Computing-Vorrichtung (106) autorisiert ist, auf den Cloud-Computing-Server (102) zuzugreifen, wenn Daten, die mit der Client-Computing-Vorrichtung (106) assoziiert sind, die in der Anforderung enthalten sind und die eine Internetprotokoll, IP, -Adresse enthalten, mit Informationen übereinstimmen, die in einer Benutzerdatenbank (208) gespeichert sind, oder wenn Daten über einen geografischen Standort der Client-Computing-Vorrichtung mit Informationen übereinstimmen, die in der Benutzerdatenbank (208) gespeichert sind;
wenn die Client-Computing-Vorrichtung (106) autorisiert ist, auf den Cloud-Computing-Server (102) zuzugreifen, empfängt die Client-Computing-Vorrichtung (106) von dem Cloud-Computing-Server (102) eine Erlaubnis, auf den Cloud-Computing-Server (102) zuzugreifen; und
wenn das Client-Computing-Vorrichtung (106) nicht autorisiert ist, auf den Cloud-Computing-Server (102) zuzugreifen, wird Folgendes ausgeführt:
Übertragen an den Cloud-Computing-Server (102) von Informationen, die bestätigen, dass die Client-Computing-Vorrichtung (106) autorisiert ist, auf Informationen zuzugreifen, die mit einem Benutzerkonto assoziiert sind, wobei die Informationen, die bestätigen, dass die Client-Computing-Vorrichtung (106) autorisiert ist, auf Informationen zuzugreifen, die mit einem Benutzerkonto assoziiert sind, eine Kombination aus einer Benutzer-ID und einem Passwort, eine persönliche Identifikationsnummer oder eine automatisch erzeugte Identifikationsnummer, die an eine Telefonnummer, die dem Benutzer bereitgestellt wurde, übertragen wird, umfassen; und
Empfangen, vom Cloud-Computing-Server (102), der Erlaubnis, auf den Cloud-Computing-Server (102) zuzugreifen, wenn die Client-Computing-Vorrichtung (106) autorisiert ist, auf Informationen zuzugreifen, die mit dem Benutzerkonto assoziiert sind, wobei der Zugriff der Computer-Vorrichtung auf den Cloud-Computing-Server (102) blockiert wird, wenn die Client-Computing-Vorrichtung (106) nicht autorisiert ist, auf Informationen zuzugreifen, die mit
einem Benutzerkonto assoziiert sind;
Empfangen, von dem Cloud-Computing-Server (102) in Erwiderung auf das Anfordern und in Erwiderung auf das Empfangen der Erlaubnis, auf den Cloud-Computing-Server (102) zuzugreifen, einer Kontoliste von Anwendungen, die mit dem Benutzerkonto assoziiert sind; und
Identifizieren einer Charakteristik der Client-Computing-Vorrichtung (106) und/oder einer lokalen Liste von Anwendungen, die auf der Client-Computing-Vorrichtung (106) installiert sind; und
Erzeugen einer Verfügbarkeitsliste (402) von Anwendungen, die von der Client-Computing-Vorrichtung (106) ausgeführt werden können, basierend auf der Kontoliste von Anwendungen und basierend auf der Charakteristik der Client-Computing-Vorrichtung (106) und/oder der lokalen Liste von Anwendungen, die auf der Client-Computing-Vorrichtung (106) installiert sind.

2. Verfahren nach Anspruch 1, das ferner umfasst:
Empfangen, von dem Cloud-Computing-Server (102), von Informationen, die einen Dateityp identifizieren, das für das Benutzerkonto verfügbar ist;
Bestimmen, ob mindestens eine Anwendung auf der Verfügbarkeitsliste (402) von Anwendungen in der Lage ist, auf den Dateityp zuzugreifen; und
in Erwiderung auf Bestimmen, dass mindestens eine Anwendung auf der Verfügbarkeitsliste (402) von Anwendungen in der Lage ist, auf den Dateityp zuzugreifen, ein Bereitstellen dem Benutzer einer Anwendungsliste der mindestens einen Anwendung auf der Verfügbarkeitsliste (402) von Anwendungen,
wobei der Dateityp vorzugsweise durch einen MIME, Multipurpose Internet Mail Extension, -Typ oder durch eine Dateierweiterung, die mit der Datei assoziiert ist, identifiziert wird, und
wobei die Information, die einen Dateityp identifiziert, der für das Benutzerkonto verfügbar ist, vorzugsweise eine Liste von mindestens einer Datei, die mit dem Benutzerkonto assoziiert ist, enthält.

3. Verfahren nach Anspruch 2, das ferner umfasst:
in Erwiderung auf Bestimmen, dass keine Anwendung auf der Verfügbarkeitsliste (402) von Anwendungen in der Lage ist, auf den Dateityp zuzugreifen, ein Filtern der Kontoliste von Anwendungen, um eine gefilterte Kontoliste von Anwendungen zu erzeugen, wobei die gefilterte Kontoliste von Anwendungen Anwendungen enthält, die mit der Charakteristik der Vorrichtung (106) assoziiert sind, die aber nicht auf der lokalen Liste von Anwendungen sind; und
Bereitstellen der gefilterten Kontoliste von Anwendungen für den Benutzer.

4. Verfahren nach Anspruch 2, das ferner umfasst:
Empfangen einer Benutzerauswahl einer Anwendung auf der Verfügbarkeitsliste (402) von Anwendungen; und
in Erwiderung auf Empfangen der Benutzerauswahl, Zugreifen auf eine Datei des Dateityps mit der Anwendung, die von dem Benutzer ausgewählt wurde.

5. Verfahren nach Anspruch 4, das ferner Erzeugen der Datei des Dateityps umfasst.

6. Verfahren nach Anspruch 1, das ferner umfasst:
Empfangen einer Benutzerauswahl einer Anwendung auf der Verfügbarkeitsliste (402) von Anwendungen; und
in Erwiderung auf Empfangen der Benutzerauswahl, ein Ausführen der Anwendung, die von dem Benutzer ausgewählt wurde.

7. Verfahren nach Anspruch 1, das ferner Übertragen der Verfügbarkeitsliste (402) an den Cloud-Computing-Server (102) umfasst.

8. Verfahren nach Anspruch 1,
wobei die lokale Liste von Anwendungen, die auf der Client-Computing-Vorrichtung (106) installiert sind, eine Browsererweiterung enthält, und/oder
wobei die Charakteristik der Client-Computing-Vorrichtung (106) ein Betriebssystem der Client-Computing-Vorrichtung (106) enthält, und/oder
wobei die Charakteristik der Client-Computing-Vorrichtung (106) einen Internet-Browser, der auf der Client-Computing-Vorrichtung (106) installiert ist, enthält.

9. Client-Computing-Vorrichtung (106), die konfiguriert ist, auf einen Cloud-Computing-Dienst zuzugreifen, und die Folgendes umfasst: einen Kommunikationsprozessor (304), der kommuniziert mit:
einer Identifikationsdatenbank (306), die konfiguriert ist, Informationen zu speichern, die mindestens eine Charakteristik der Client-Computing-Vorrichtung (106) betreffen; und
einer Anwendungsdatenbank (308), die konfiguriert ist, Informationen zu speichern, die Anwendungen betreffen, die auf der Client-Computing-Vorrichtung (106) installiert sind;
wobei der Kommunikationsprozessor (304) dazu konfiguriert ist:
Zugriff auf einen Cloud-Computing-Server (102) anzufordern, der den Cloud-Computing-Dienst bereitstellt, wobei die Client-Computing-Vorrichtung (106) autorisiert ist, auf den Cloud-Computing-Server (102) zuzugreifen, wenn Daten, die mit der Client-Computing-Vorrichtung (106) assoziiert sind, die in der Anforderung enthalten sind und die eine Internetprotokoll, IP, -Adresse enthalten, mit Informationen übereinstimmen, die in einer Benutzerdatenbank (208) gespeichert sind, oder wenn Daten über einen geografischen Standort der Client-Computing-Vorrichtung mit Informationen übereinstimmen, die in der Benutzerdatenbank (208) gespeichert sind;
wenn die Client-Computing-Vorrichtung (106) autorisiert ist, auf den Cloud-Computing-Server (102) zuzugreifen, von dem Cloud-Computing-Server (102) eine Erlaubnis zu empfangen, auf den Cloud-Computing-Server (102) zuzugreifen; und
wenn die Client-Computing-Vorrichtung (106) nicht autorisiert ist, auf den Cloud-Computing-Server (102) zuzugreifen, ist der Kommunikationsprozessor (304) konfiguriert zum:
Übertragen an den Cloud-Computing-Server (102) von Informationen, die bestätigen, dass die Client-Computing-Vorrichtung (106) autorisiert ist, auf Informationen zuzugreifen, die mit einem Benutzerkonto verbunden sind, wobei die Informationen, die bestätigen, dass die Client-Computing-Vorrichtung (106) berechtigt ist, auf Informationen zuzugreifen, die mit einem Benutzerkonto verbunden sind, eine Kombination aus einer Benutzer-ID und einem Passwort, eine persönliche Identifikationsnummer oder eine automatisch erzeugte Identifikationsnummer, die an eine Telefonnummer, die dem Benutzer bereitgestellt wurde, übertragen wird, aufweisen; und
Empfangen, von dem Cloud-Computing-Server (102), der Erlaubnis, auf den Cloud-Computing-Server (102) zuzugreifen, wenn die Client-Computing-Vorrichtung (106) autorisiert ist, auf Informationen zuzugreifen, die mit dem Benutzerkonto assoziiert sind, wobei der Zugriff der Computer-Vorrichtung auf den Cloud-Computing-Server (102) blockiert wird, wenn die Client-Computing-Vorrichtung (106) nicht autorisiert ist, auf Informationen zuzugreifen, die mit einem Benutzerkonto assoziiert sind;
zum Empfangen, von dem Cloud-Computing-Server (102) in Erwiderung auf das Anfordern und in Erwiderung auf das Empfangen der Erlaubnis, auf den Cloud-Computing-Server (102) zuzugreifen, einer Kontoliste von Anwendungen, die mit dem Benutzerkonto assoziiert sind;
zum Identifizieren einer Charakteristik der Client-Computing-Vorrichtung (106) und/oder einer lokalen Liste von Anwendungen, die auf der Client-Computing-Vorrichtung (106) installiert sind; und
zum Erzeugen einer Verfügbarkeitsliste (402) von Anwendungen, die von der Client-Computing-Vorrichtung (106) ausgeführt werden können, basierend auf der Kontoliste von Anwendungen und basierend auf der Charakteristik der Client-Computing-Vorrichtung (106) und/oder der lokalen Liste von Anwendungen, die auf der Client-Computing-Vorrichtung (106) installiert sind.

10. Client-Computing-Vorrichtung (106) nach Anspruch 9, die ferner Folgendes umfasst:
eine Benutzerschnittstelle (310), die mit dem Kommunikationsprozessor (304) kommuniziert,
wobei die Benutzerschnittstelle (310) konfiguriert ist, Informationen für den Benutzer bereitzustellen;
wobei der Kommunikationsprozessor (304) ferner konfiguriert ist:
zum Empfangen, von dem Cloud-Computing-Server (102), von Informationen, die einen Dateityp identifizieren, das für das Benutzerkonto verfügbar ist,
zum Bestimmen, ob mindestens eine Anwendung auf der Verfügbarkeitsliste (402) von Anwendungen in der Lage ist, auf den Dateityp zuzugreifen, und
in Erwiderung auf das Bestimmen, dass mindestens eine Anwendung auf der Verfügbarkeitsliste (402) von Anwendungen in der Lage ist, auf den Dateityp zuzugreifen, zum Anweisen der Benutzerschnittstelle (310), dem Benutzer eine Anwendungsliste der mindestens einen Anwendung auf der Verfügbarkeitsliste (402) von Anwendungen bereitzustellen,
wobei der Dateityp vorzugsweise durch einen MIME, Multipurpose Internet Mail Extension, -Typ oder durch eine Dateierweiterung, die mit der Datei assoziiert ist, identifiziert wird, und
wobei die Information, die einen Dateityp identifiziert, der für das Benutzerkonto verfügbar ist, vorzugsweise eine Liste von mindestens einer Datei, die mit dem Benutzerkonto assoziiert ist, enthält.

11. Client-Computing-Vorrichtung (106) nach Anspruch 10, wobei der Kommunikationsprozessor (304) ferner konfiguriert ist zum:
Filtern der Kontoliste von Anwendungen, um eine gefilterte Kontoliste von Anwendungen zu erzeugen, in Erwiderung auf das Bestimmen, dass keine Anwendung auf der Verfügbarkeitsliste (402) von Anwendungen in der Lage ist, auf den Dateityp zuzugreifen, wobei die gefilterte Kontoliste von Anwendungen Anwendungen enthält, die mit der Charakteristik der Vorrichtung (106) assoziiert sind, die aber nicht auf der lokalen Liste von Anwendungen sind; und
Ansteuerung der Benutzerschnittstelle (310), um dem Benutzer die gefilterte Kontoliste von Anwendungen bereitzustellen.

12. Client-Computing-Vorrichtung nach Anspruch 10:
wobei die Benutzerschnittstelle (310) ferner konfiguriert, eine Benutzerauswahl einer Anwendung auf der Verfügbarkeitsliste (502) von Anwendungen zu empfangen, und
wobei der Kommunikationsprozessor (304) ferner konfiguriert ist, in Erwiderung auf die Benutzerauswahl, auf eine Datei des Dateityps mit der Anwendung, die von dem Benutzer ausgewählt wurde, zuzugreifen.

13. Client-Computing-Vorrichtung nach Anspruch 12, wobei der Kommunikationsprozessor (304) ferner konfiguriert ist, die Datei des Dateityps zu erzeugen.

14. Client-Computing-Vorrichtung nach Anspruch 9, die ferner Folgendes umfasst:
eine Benutzerschnittstelle (500), die konfiguriert ist, eine Benutzerauswahl einer Anwendung auf der Verfügbarkeitsliste (502) von Anwendungen zu empfangen,
wobei der Kommunikationsprozessor (304) ferner konfiguriert ist, in Erwiderung auf das Empfangen der Benutzerauswahl, die Anwendung, die von dem Benutzer ausgewählt wurde, auszuführen, und
wobei der Kommunikationsprozessor (304) vorzugsweise ferner konfiguriert ist, die Verfügbarkeitsliste (502) an den Cloud-Computing-Server zu übertragen.

15. Client-Computing-Vorrichtung nach Anspruch 9,
wobei die lokale Liste von Anwendungen, die auf der Client-Computing-Vorrichtung (106) installiert sind, eine Browsererweiterung enthält, und/oder
wobei die Charakteristik der Client-Computing-Vorrichtung (106) ein Betriebssystem der Client-Computing-Vorrichtung (106) enthält, und/oder
wobei die Charakteristik der Client-Computing-Vorrichtung (106) einen Internet-Browser, der auf der Client-Computing-Vorrichtung (106) installiert ist, enthält.

## Revendications

1. Un procédé mis en œuvre par ordinateur pour identifier des applications disponibles pour un utilisateur d'un service de cloud computing, comprenant :
le fait, par un dispositif informatique client (106), de demander l'accès à un serveur de cloud computing (102) fournissant le service de cloud computing, dans lequel :
le dispositif informatique client (106) est autorisé à accéder au serveur de cloud computing (102) si des données associées au dispositif informatique client (106), contenues dans la demande, et comprenant une adresse de protocole Internet, en abrégé IP, correspondent à des informations stockées dans une base de données d'utilisateurs (208) ou si des données sur un emplacement géographique du dispositif informatique client correspondent à des informations stockées dans la base de données d'utilisateurs (208) ;
si le dispositif informatique client (106) est autorisé à accéder au serveur de cloud computing (102), le dispositif informatique client (106) reçoit du serveur de cloud computing (102) une autorisation d'accéder au serveur de cloud computing (102) ; et
si le dispositif informatique client (106) n'est pas autorisé à accéder au serveur de cloud computing (102), ce qui suit est exécuté :
le fait de transmettre au serveur de cloud computing (102) une information vérifiant que le dispositif informatique client (106) est autorisé à accéder à des informations associées à un compte d'utilisateur, l'information qui vérifie que le dispositif informatique client (106) est autorisé à accéder à des informations associées à un compte d'utilisateur comprenant une combinaison d'identifiant d'utilisateur et de mot de passe, un numéro d'identification personnel ou un numéro d'identification généré automatiquement transmis à un numéro de téléphone fourni à l'utilisateur ; et
le fait de recevoir, du serveur de cloud computing (102), l'autorisation d'accéder au serveur de cloud computing (102) si le dispositif informatique client (106) est autorisé à accéder à des informations associées au compte d'utilisateur, l'accès du dispositif informatique au serveur de cloud computing (102) étant bloqué si le dispositif informatique client (106) n'est pas autorisé à accéder aux informations associées à un compte d'utilisateur ;
le fait de recevoir, du serveur de cloud computing (102), en réponse à la requête et en réponse à la réception de l'autorisation d'accès au serveur de cloud computing (102), une liste de comptes d'applications associées au compte d'utilisateur ; et
le fait d'identifier au moins une parmi une caractéristique du dispositif informatique client (106) et une liste locale d'applications installées sur le dispositif informatique client (106) ; et
le fait de générer une liste (402) de disponibilité d'applications qui peuvent être exécutées par le dispositif informatique client (106) sur la base de la liste de comptes d'applications et de ladite au moins une parmi la caractéristique du dispositif informatique client (106) et la liste locale d'applications installées sur le dispositif informatique client (106).

2. Le procédé selon la revendication 1, comprenant en outre :
le fait de recevoir, du serveur de cloud computing (102), des informations identifiant un type de fichier disponible pour le compte d'utilisateur ;
le fait de déterminer si au moins une application de la liste (402) de disponibilité d'applications est apte à accéder au type de fichier ; et
en réponse à la détermination qu'au moins une application sur la liste (402) de disponibilité d'applications est apte à accéder au type de fichier, le fait de fournir à l'utilisateur une liste d'applications de ladite au moins une application sur la liste (402) de disponibilité d'applications,
le type de fichier étant de préférence identifié par un type à extension de messagerie Internet polyvalente, en abrégé MIME, ou par une extension de fichier associée au fichier, et
de préférence, les informations qui identifient un type de fichier disponible pour le compte d'utilisateur comprenant une liste d'au moins un fichier associé au compte d'utilisateur.

3. Le procédé selon la revendication 2, comprenant en outre :
en réponse à la détermination qu'aucune application sur la liste (402) de disponibilité d'applications n'est apte à accéder au type de fichier, le fait de filtrer la liste de comptes d'applications pour générer une liste de comptes d'applications filtrée, la liste de comptes d'applications filtrée comprenant des applications qui sont associés à la caractéristique du dispositif (106) mais ne sont pas sur la liste locale des applications ; et
le fait de fournir à l'utilisateur la liste de comptes d'applications filtrée.

4. Le procédé selon la revendication 2, comprenant en outre :
le fait de recevoir une sélection d'utilisateur d'une application sur la liste (402) de disponibilité d'applications ; et, en réponse à la réception de la sélection d'utilisateur, le fait d'accéder à un fichier du type de fichier avec l'application sélectionnée par l'utilisateur.

5. Le procédé selon la revendication 4, comprenant en outre le fait de générer le fichier du type de fichier.

6. Le procédé selon la revendication 1, comprenant en outre :
le fait de recevoir une sélection d'utilisateur d'une application sur la liste (402) de disponibilité d'applications ; et, en réponse à la réception de la sélection d'utilisateur, le fait d'exécuter l'application sélectionnée par l'utilisateur.

7. Le procédé selon la revendication 1, comprenant en outre le fait de transmettre la liste de disponibilité (402) au serveur de cloud computing (102).

8. Le procédé selon la revendication 1,
dans lequel la liste locale d'applications installées sur le dispositif informatique client (106) comprend une extension de navigateur, et/ou
dans lequel la caractéristique du dispositif informatique client (106) comprend un système d'exploitation du dispositif informatique client (106), et/ou
dans lequel la caractéristique du dispositif informatique client (106) comprend un navigateur Internet installé sur le dispositif informatique client (106).

9. Un dispositif informatique client (106) configuré pour accéder à un service de cloud computing, comprenant : un processeur de communication (304) en communication avec :
une base de données d'identification (306) configurée pour stocker des informations concernant au moins une caractéristique du dispositif informatique client (106) ; et
une base de données d'applications (308) configurée pour stocker des informations concernant les applications installées sur le dispositif informatique client (106) ;
le processeur de communication (304) est configuré pour :
demander l'accès à un serveur de cloud computing (102) fournissant le service de cloud computing, le dispositif informatique client (106) étant autorisé à accéder au serveur de cloud computing (102) si des données associées au dispositif informatique client (106), contenues dans la demande, et comprenant une adresse de protocole Internet, en abrégé IP, correspondent à des informations stockées dans une base de données d'utilisateurs (208) ou si des données sur un emplacement géographique du dispositif informatique client correspondent à des informations stockées dans la base de données d'utilisateurs (208) ;
si le dispositif informatique client (106) est autorisé à accéder au serveur de cloud computing (102), recevoir du serveur de cloud computing (102) une autorisation d'accéder au serveur de cloud computing (102) ; et
si le dispositif informatique client (106) n'est pas autorisé à accéder au serveur de cloud computing (102), le processeur de communication (304) est configuré pour :
transmettre, au serveur de cloud computing (102), des informations vérifiant que le dispositif informatique client (106) est autorisé à accéder à des informations associées à un compte d'utilisateur, les informations qui vérifient que le dispositif informatique client (106) est autorisé à accéder à des informations associées à un compte d'utilisateur comprenant une combinaison d'identifiant d'utilisateur et de mot de passe, un numéro d'identification personnel ou un numéro d'identification généré automatiquement transmis à un numéro de téléphone fourni à un utilisateur ; et
recevoir du serveur de cloud computing (102) l'autorisation d'accéder au serveur de cloud computing (102) si le dispositif informatique client (106) est autorisé à accéder à des informations associées au compte d'utilisateur, l'accès du dispositif informatique au serveur de cloud computing (102) étant bloqué si le dispositif informatique client (106) n'est pas autorisé à accéder aux informations associées à un compte d'utilisateur ;
recevoir, du serveur de cloud computing (102) en réponse à la demande et en réponse à la réception de l'autorisation d'accéder au serveur de cloud computing (102), une liste de comptes d'applications associées au compte d'utilisateur ;
identifier au moins une caractéristique parmi une caractéristique du dispositif informatique client et une liste locale d'applications installées sur le dispositif informatique client ; et
générer une liste (402) de disponibilité d'applications qui peuvent être exécutées par le dispositif informatique client (106) sur la base de la liste de comptes d'applications et d'au moins une parmi la caractéristique du dispositif informatique client (106) et la liste locale d'applications installé sur le dispositif informatique client (106).

10. Le dispositif informatique client (106) selon la revendication 9, comprenant en outre :
une interface utilisateur (310) en communication avec le processeur de communication (304),
l'interface utilisateur (310) étant configurée pour fournir des informations à l'utilisateur ;
le processeur de communication (304) étant en outre configuré pour :
recevoir, du serveur de cloud computing (102), des informations identifiant un type de fichier disponible pour le compte d'utilisateur,
déterminer si au moins une application sur la liste (402) de disponibilité d'applications est apte à accéder au type de fichier, et
en réponse à la détermination qu'au moins une application sur la liste (402) de disponibilité d'applications est apte à accéder au type de fichier, ordonner à l'interface utilisateur (310) de fournir à l'utilisateur une liste d'applications de ladite au moins une application sur la liste (402) de disponibilité d'applications,
le type de fichier étant de préférence identifié par un type à extension de messagerie Internet polyvalente, en abrégé MIME, ou par une extension de fichier associée au fichier, et
de préférence, les informations qui identifient un type de fichier disponible pour le compte d'utilisateur comprenant une liste d'au moins un fichier associé au compte d'utilisateur.

11. Le dispositif informatique client (106) selon la revendication 10, dans lequel le processeur de communication (304) est en outre configuré pour :
filtrer la liste de comptes d'applications pour générer une liste de comptes d'applications filtrée en réponse à la détermination qu'aucune application sur la liste (402) de disponibilité d'applications n'est apte à accéder au type de fichier, la liste de comptes d'applications filtrée comprenant des applications qui sont associées à la caractéristique du dispositif (106) mais qui ne sont pas sur la liste locale des applications ; et
diriger l'interface utilisateur (310) pour fournir la liste de comptes d'applications filtrée à l'utilisateur.

12. Le dispositif informatique client selon la revendication 10 :
dans lequel l'interface utilisateur (310) est en outre configurée pour recevoir une sélection d'utilisateur d'une application sur la liste (502) de disponibilité d'applications, et
dans lequel le processeur de communication (304) est en outre configuré pour accéder à un fichier du type de fichier avec l'application sélectionnée par l'utilisateur en réponse à la sélection d'utilisateur.

13. Le dispositif informatique client selon la revendication 12, dans lequel le processeur de communication (304) est en outre configuré pour générer le fichier du type de fichier.

14. Le dispositif informatique client selon la revendication 9, comprenant en outre :
une interface utilisateur (500) configurée pour recevoir une sélection d'utilisateur d'une application sur la liste (502) de disponibilité d'applications,
le processeur de communication (304) étant en outre configuré pour exécuter l'application sélectionnée par l'utilisateur en réponse à la sélection d'utilisateur, et
le processeur de communication (304) étant de préférence en outre configuré pour transmettre la liste de disponibilité (502) au serveur de cloud computing.

15. Le dispositif informatique client selon la revendication 9,
dans lequel la liste locale d'applications installées sur le dispositif informatique client (106) comprend une extension de navigateur, et/ou
dans lequel la caractéristique du dispositif informatique client (106) comprend un système d'exploitation du dispositif informatique client (106), et/ou
dans lequel la caractéristique du dispositif informatique client (106) comprend un navigateur Internet installé sur le dispositif informatique client (106).
